# EUROPEAN PATENT SPECIFICATION

(11) **EP 3 393 257 B1**
(45) Date of publication and mention of the grant of the patent: **15.01.2020**
(21) Application number: 15837136.9
(22) Date of filing: 24.12.2015
(51) Int. Cl.: A23C 9/12, A23C 9/127

(54) **USE OF A LACTASE FOR IMPROVING THE PREPARATION OF A STRAINED FERMENTED DAIRY PRODUCT**
VERWENDUNG EINER LACTASE ZUR VERBESSERUNG DER HERSTELLUNG EINES GESIEBTEN FERMENTIERTEN MILCHPRODUKTS
UTILISATION DE LACTASE POUR AMÉLIORER LA PRÉPRARATION D'UN PRODUIT LAITIER FERMENTÉ FILTRÉ

(43) Date of publication of application: 31.10.2018
(73) Proprietor: Compagnie Gervais Danone, 75009 Paris (FR); Danone, S.A., 08029 Barcelona (ES)
(72) Inventor: BILBAO CALABUIG, Maria Almudena, 28035 Madrid (ES); MARCHAL, Laurent, 91360 Villemoisson Sur Orge (FR); FLABBI, Paola, 28027 Madrid (ES)
(74) Representative: Regimbeau
(86) International application number: PCT/IB2015/002576
(87) International publication number: WO 2017/109532

(56) References cited:
- EP-A1- 2 957 180
- WO-A1-2015/193449
- WO-A1-2015/193459
- CA-A1- 2 360 837
- US-A1- 2011 020 494
- US-A1- 2015 342 208
- B Özer: "6 Production of Concentrated Products" In: "Fermented Milks", 1 January 2006 (2006-01-01), Blackwell Science Ltd, XP055045789, pages 128-155, Chapter 6.3; page 141 - page 143 page 134, paragraph 1 - paragraph 2; figure 6.3

## Description

The present invention relates to a method for manufacturing a strained fermented dairy product and the use of lactase for preventing the clogging of the separation device used in the preparation of a strained fermented dairy product.

Fermented dairy products are recognized by consumers as healthy food having nutritional benefits. Among these fermented dairy products, strained fermented dairy products present the interest to contain higher levels of proteins than in conventional fermented dairy products, which represent an additional nutritional benefit.

Such strained fermented dairy products are generally prepared by the same method as for conventional fermented dairy products, with an additional step consisting in the separation of a liquid phase also called whey (containing generally water, lactose, minerals, etc.) from the conventional fermented dairy products. The remaining solid phase constitutes the desired strained fermented dairy products having an increased protein content. Such processes are disclosed notably in WO2015/193449, WO 2014/114970 or WO 2014/169171.

The separation step can be performed notably by centrifugation. However, due to the formation of a thicker dairy product (solid phase) during this step, clogging issues of the separating device can occur after only few hours of operation of the production line.

There is thus a need for an improved method for manufacturing strained fermented dairy products, preventing the clogging of the separating device.

The inventors of the present invention have surprisingly discovered that such a clogging issue could be solved by adding a lactase at the time of the fermentation step.

The present invention relates thus to a method for manufacturing a strained fermented dairy product comprising the following successive steps:
(a) providing a dairy product,
(b) adding a lactase and a culture of bacteria comprising at least one strain of thermophilic lactic acid bacteria and at least one strain of mesophilic lactic acid bacteria and fermenting the dairy product to obtain a fermented dairy product, and
(c) separating a liquid whey from the fermented dairy product to obtain a strained fermented dairy product, wherein the lactase is added before the culture of bacteria.

### Dairy product:

In the context of the present invention, "dairy product" designates more particularly a dairy product ready for human consumption made from milk of animal or vegetal origin.

The dairy product based on milk of animal origin can be made from milk and milk components having a cow, goat, sheep, buffalo, donkey or camel origin, preferably a cow origin.

The dairy product based on milk of vegetal origin can be made from grain milk such as barley milk, oat milk, rice milk or spelt milk; legumes-based milk such as lupin milk, pea milk, peanut milk or soy milk; nut milk such as almond milk, cashew milk, hazelnut milk or walnut milk; or seed milk such as hemps milk, quinoa milk, sesame seed milk, sunflower seed milk or coconut milk. It contains thus vegetal proteins. Preferably, the dairy product based on milk of vegetal origin will be made from soy milk, oat milk, rice milk or almond milk.

Prefereably, the dairy product is made from milk and milk components of animal origin, and in particular of cow origin.

Food additives can also be present in the dairy product, notably chosen among:
- sugars and sweeteners:
   sugars and sweeteners are food-acceptable carbohydrate sweetening agents that may be natural or artificial, no or low calorie sweeteners,
   preferred examples of appropriate sugars are sucrose, fructose, lactose, glucose and maltose, wherein such sugars can be incorporated in the form of beet sugar,
   cane sugar, maple sugar, molasses, corn syrup, malt syrup, maple syrup, agave nectar or also honey,
   preferred examples of appropriate no or low calorie sweeteners are aspartame, sucralose, acesulfame potassium, saccharin, sodium cyclamate, thaumatin, tagatose, neohesperidin dihydrochalcone, or isomaltulose,
- vitamins (e.g. vitamin A, B1, B2, B6, B12, C, D, E or K, folic acid, etc.),
- salts (e.g. sodium chloride),
- anti-oxidants,
- pH-modifying agents (e.g. buffering agents or acidifying agents such as citric acid and its salts, for ex. sodium, potassium or calcium citrate),
- lubricants (e.g. vegetable oils),
- preservatives (e.g. sorbic acid and its salts such as sodium, potassium and calcium salts, sulphur dioxide, benzoic acid and its salts such as sodium, potassium and calcium salts, ethyl, methyl or propyl p-hydroxybenzoate, etc.),
- taste exhausters (e.g. glutamic acid and its salts such as sodium, potassium, calcium, magnesium or ammonium salts),
- texturizing agents:
   texturizing agents are used to modify the overall texture or mouthfeel of a food product and include gelling agents (for ex. gelatine, agar, carrageenan, pectin, natural gums), stabilisers (for ex. starch, agar, pectin, Arabic gum, gelatin), emulsifiers (for ex. lecithin, mono- and di-glycerides of fatty acids (E471), esters of mono- and di-glycerides of fatty acid (E472a-f)), and thickeners (for ex.guar gum, xanthan gum, pectin, starch, agar, carrageenan, alginic acid),
- flavouring aromatic agents of synthetic or natural origin (e.g. fruit flavours),
- colouring agents (pigments, dyes, etc.), and
- vegetal ingredients (such as fruits and fruit pieces).

If need be, the skilled person will be able to choose appropriate food additives among all the well-known food additives available on the market. These food additives can be added at different stages of the method of manufacturing of the strained fermented dairy product.

### Strained fermented dairy product:

The dairy product produced by the method according to the present invention is a strained fermented dairy product.

In the context of the present invention, "strained fermented dairy product" designates more particularly a strained fermented dairy product ready for human consumption, such as a strained fermented milk such as, skyr, greek or a strained yoghurt "also called concentrated yoghurt, Greek-style yoghurt or labneh.

The terms "fermented milk" and "yoghurt" are given their usual meanings in the field of the dairy industry, that is, products intended for human consumption and originating from acidifying lactic fermentation of a milk substrate, having an animal or vegetal origin, preferably an animal origin.

The expression "fermented milk" is thus reserved in the present application for a dairy product prepared with a milk substrate which has undergone treatment at least equivalent to pasteurisation, seeded with microorganisms belonging to the characteristic species or species of each product.

The term "yoghurt" is reserved for fermented milk obtained, according to local and constant usage, by the development of specific thermophilic lactic bacteria known as *Lactobacillus delbrueckii* subsp. *bulgaricus* and *Streptococcus thermophilus,* which must be in the living state in the finished product, at a minimum rate. In certain countries, regulations require the addition of other lactic acid bacteria to the production of yoghurt, and especially the additional use of strains of *Bifidobacterium* and/or *Lactobacillus acidophilus* and/or *Lactobacillus casei.* These additional lactic acid bacteria strains are intended to impart various properties to the finished product, such as that of favouring equilibrium of intestinal flora or modulating the immune system.

In practice, the expression "fermented milk" is therefore generally used to designate fermented milks other than yoghurts.

The term "strained" dairy product refers to a dairy product obtained by a separation step in which a liquid whey is separated from a solid phase (the strained dairy product), such as in step (c) of the method according to the invention.

Prefereably, the strained fermented dairy product will not be a cheese.

The strained fermented dairy product obtained by the method according to the invention can have a total protein content comprised between 6 and 16%, notably between 7 and 12%, such as between 8 and 10%.

The "total protein content" of a dairy product corresponds to the weight of the proteins present in the dairy product relatively to the total weight of the dairy product. The total protein content is expressed as a weight percentage.

The total protein content can be measured by Kjeldahl analysis (NF EN ISO 8968-1) as the reference method for the determination of the total protein content of dairy products based on measurement of total nitrogen content. The method is described in both AOAC Method 991.20 (1) and international Dairy Federation Standard (IDF) 20B:1993.

The strained fermented dairy product obtained by the method according to the invention can have a fat content comprised between 0 and 6%, notably between 1 and 5%, such as between 2 and 3%.

The "fat content" of the dairy product corresponds to the weight of the fat components present in the dairy product relatively to the total weight of the dairy product. The fat content is expressed as a weight percentage.

The fat content can be measured by the Weibull-Berntrop gravimetric method described in the standard NF ISO 8262-3.

The strained fermented dairy product used in the method according to the present invention is a high textured dairy product, i.e. a thick dairy product having a viscosity comprised between 1500 and 5000 mPa.s, notably between 3000 and 4000 mPa.s, advantageously between 3300 and 3700 mPa.s.

The viscosity is measured at 24 h (i.e 24h after the production of the product) by a viscometer, more particularly of Rheomat type, equipped with a measuring bob / measuring tube system of type 2 / 2 with a shear rate of 64 s⁻¹ during 90 s at 10°C. The viscometer can be for example a Rheomat RM200. The measuring bob / measuring tube system of 2-2 type is a system in which the measuring bob is of type 2 and has a diameter of 24 mm and the measuring tube is of type 2 and has a diameter of 26.03 mm.

The viscosity of the dairy product is the viscosity as measured after 24h cold storage at 2 to 6°C after the end of step (c). Indeed, this viscosity can change during the shelf life of the product. In particular, the viscosity of a fermented dairy product increases during its shelf life.

### Step (a) - Providing a dairy product

The dairy product used as a starting material to prepare the strained fermented dairy product according to the invention is a non-fermented dairy product, also called dairy mix or dairy starting material, containing milk and milk components of animal or vegetal origin, and optionally other food additives such as those indicated previously. The dairy product is thus obtained by the mixing of its various ingredients.

The milk and milk components of animal original can be whole milk and/or wholly or partly skimmed milk, which can be used in a powder, concentrated or retentate form which can be reconstituted by addition of water. Other milk components can be added such as cream, casein, caseinate (for ex. calcium or sodium caseinate), whey proteins notably in the form of a concentrate (WPC), milk proteins notably in the form of a concentrate (MPC), milk protein hydrolysates and mixtures thereof.

The milk and milk components of animal origin can have a cow, goat, sheep, buffalo, donkey or camel origin, preferably a cow origin.

The milk and milk components of vegetal origin can be obtained from grain milk such as barley milk, oat milk, rice milk or spelt milk; legumes-based milk such as lupin milk, pea milk, peanut milk or soy milk; nut milk such as almond milk, cashew milk, hazelnut milk or walnut milk; or seed milk such as hemps milk, quinoa milk, sesame seed milk, sunflower seed milk or coconut milk. It contains thus vegetal proteins. Preferably, the dairy product based on milk of vegetal origin will be made from soy milk, oat milk, rice milk or almond milk.

Preferably, the dairy product is made from milk and milk components of animal origin, and in particular of cow origin.

The dairy product provided in step(a) can have a total protein content comprised between 2.8and 4.6%, notably between 3.1 and 4.0%, such as between 3.2 and 3.6%.

The dairy product provided in step(a) can have a fat content between 0 and 2.0%, notably between 0.05 and 1.0%, such as between 0.1 and 0.3%.

Preferably, the dairy product provided in step a) is a heat-treated dairy product.

The heat-treatment of the dairy product is also called pasteurisation. It aims to kill microorganisms, including pathogenic microorganisms, in the dairy product in order to preserve the quality and the organoleptic properties of the final product and to prevent the consumer to be infected by pathogenic microorganisms present in the dairy product and develop diseases.

The heat-treatment is commonly performed at a temperature (heat-treatment temperature) comprised between 72°C and 140°C, preferably during 2 seconds to 30 minutes.

The heat-treatment can also be performed in several steps, notably two steps, where the dairy product is heated at distinct temperatures in each step. For example, the heat-treatment can be performed according to the two following successive steps:
(1) a first step of pre heat-treatment performed at a temperature comprised between 55 and 95°C, notably until a temperature between 55 and 95°C is reached,
(2) a second step of heat-treatment performed at a temperature comprised between 90 and 95°C, notably for 2 to 7 min,

Advantageously, a homogenisation step is performed between the 2 heating steps, notably at a pressure comprised between 20 and 300 bars (20-300.10⁵ Pa), notably between 50 and 250 bars (50-250.10⁵ Pa). This homogenisation step will be performed more particularly at a temperature of between 55 and 95°C.

### Step (b) - Adding lactase and a culture of bacteria and Fermentation

Lactase and a culture of bacteria are added to the dairy product, in particular to a dairy product which has been heat-treated. The dairy product is fermented in particular at a temperature (fermentation temperature) between 25°C and 44°C, notably between 30 and 40°C. The fermentation is performed in particular for 3 to 25 hours, preferably for 5 to 15 hours.

The lactase and the culture of bacteria cannot be added to the dairy product at a too high temperature and are generally added at the fermentation temperature. Consequently, when the dairy product has been heat-treated, it is necessary to cool the heat-treated dairy product obtained at the end of the heat-treatment step to the fermentation temperature before inoculating the lactase and the culture of bacteria and performing the fermentation step.

The fermentation step is commonly a lactic fermentation which involves techniques well-known to the skilled person.

When reference is made to a "lactic fermentation", this means an acidifying lactic fermentation which results in milk coagulation and acidification following the production of lactic acid which may be accompanied by the production of other acids, carbon dioxide and various substances such as exopolysaccharides (EPS) or aromatic substances, for example diacetyl and acetaldehyde.

Various bacteria can be used for performing the fermentation of the dairy product and in particular lactic acid bacteria such as:
- *Lactobacillus sp.* (for ex. *Lactobacillus bulgaricus,* and especially *Lactobacillus delbrueckii* subsp. *bulgaricus Lactobacillus acidophilus, Lactobacillus paracasei, Lactobacillus casei, Lactobacillus pentosus, Lactobacillus helveticus, Lactobacillus reuteri, Lactobacillus plantarum, Lactobacillus bifidus* and combinations thereof),
- *Lactococcus sp.* (for ex. *Lactococcus lactis* and especially *Lactococcus lactis* subsp. *lactis, Lactococcus lactis* subsp. *cremoris* and combinations thereof),
- *Bifidobacterium sp.* (for ex. *Bifidobacterium bifidum, Bifidobacterium infantis, Bifidobacterium animalis* and especially *Bifidobacterium animalis* subsp. *lactis, Bifidobacterium breve, Bifidobacterium longum* and combinations thereof),
- *Streptococcus sp.* (for ex. *Streptococcus thermophilus, Streptococcus lactis, Streptococcus raffinolactis, Streptococcus cremoris* and combinations thereof), and combinations thereof.

Preferred lactic acid bacteria to be used in the present invention are selected from *Lactobacillus bulgaricus, Streptococcus thermophilus, Lactococcus lactis, Bifidobacterium animalis* subsp. *lactis,* and combinations thereof.

More preferred lactic acid bacteria to be used in the present invention are selected from:
- *Lactobacillus delbrueckii* subsp. *bulgaricus* deposited under the number CNCM I-1632 or *Lactobacillus delbrueckii* subsp. *bulgaricus* deposited under the number CNCM I-1519,
- *Streptococcus thermophilus* deposited under the number CNCM-1630,
- *Lactococcus lactis* subsp. *lactis* deposited under the number CNCM-1631,
- *Bifidobacterium animalis* subsp. *lactis* deposited under the number CNCM-2494,
and combinations thereof. The above mentioned lactic acid bacteria have been deposited under the Budapest treaty at the Collection Nationale de Cultures de Micro-organismes (CNCM) located at Institut Pasteur's headquarters (25 rue du Docteur Roux 75724 PARIS Cedex 15 FRANCE).

In the framework of the present invention, the culture of bacteria comprises:
- at least one strain of mesophilic lactic acid bacteria, such as *Lactococcus* sp., and
- at least one strain of thermophilic lactic acid bacteria, such as *Streptococcus sp., Lactobacillus sp.* and/or *Bifidobacterium* sp., and especially *Bifidobacterium* sp..

By "mesophilic lactic acid bacteria" is meant, in the present invention, lactic acid bacteria that grow best in moderate temperature, typically between 20 and 30°C. The mesophilic lactic acid bacteria can be in particular *Lactococcus* sp. such as defined previously, and even more particularly *Lactococcus lactis* subsp. *lactis.*

By "thermophilic lactic acid bacteria" is meant, in the present invention, lactic acid bacteria that grow best in relatively high temperature, typically above 35°C, notably between 38 and 44°C. The thermophilic lactic acid bacteria can be selected in the group consisting of *Streptococcus sp., Lactobacillus sp., Bifidobacterium sp.* and combinations thereof, such as defined previously, and notably *Streptococcus thermophilus, Lactobacillus delbrueckii* subsp. *bulgaricus, Bifidobacterium animalis* subsp. *lactis,* or a combination thereof.

According to a particular embodiment, the culture of bacteria used in the present invention comprises:
- at least one strain of mesophilic lactic acid bacteria selected from *Lactococcus* sp., and
- at least one strain of thermophilic lactic acid bacteria strain selected from *Streptococcus* sp., *Lactobacillus* sp., *Bifidobacterium* sp. and a mixture thereof.

According to a preferred embodiment, the culture of bacteria used in the present invention comprises:
- at least one strain of mesophilic lactic acid bacteria selected from *Lactococcus lactis* subsp. *lactis, Lactococcus lactis* subsp. *cremoris* and a mixture thereof, and
- at least one strain of thermophilic lactic acid bacteria selected from *Streptococcus thermophilus, Streptococcus lactis, Streptococcus raffinolactis, Streptococcus cremoris, Lactobacillus bulgaricus,* and especially *Lactobacillus delbrueckii* subsp. *bulgaricus Lactobacillus acidophilus, Lactobacillus paracasei, Lactobacillus casei, Lactobacillus pentosus, Lactobacillus helveticus, Lactobacillus reuteri, Lactobacillus plantarum, Lactobacillus bifidus, Bifidobacterium bifidum, Bifidobacterium infantis, Bifidobacterium animalis* and especially *Bifidobacterium animalis* subsp. *lactis, Bifidobacterium breve, Bifidobacterium longum* and a mixture thereof.

According to another embodiment, the culture of bacteria comprises at least one strain of *Bifidobacterium* sp.. The *Bifidobacterium* sp.can be *Bifidobacterium bifidum, Bifidobacterium infantis, Bifidobacterium animalis* and especially *Bifidobacterium animalis* subsp. *lactis, Bifidobacterium breve, Bifidobacterium longum* or a combination thereof.

According to a particular embodiment, the culture of bacteria comprises, notably consists in, a combination of *Lactobacillus delbrueckii* subsp. *bulgaricus, Streptococcus thermophilus and Lactococcus lactis* subsp. *lactis .*

According to another particular embodiment, the culture of bacteria comprises, notably consists in, a combination of *Lactobacillus delbrueckii* subsp. *bulgaricus, Streptococcus thermophilus, Lactococcus lactis* subsp. *lactis* and *Bifidobacterium animalis* subsp. *lactis.*

The fermentation step will be stopped, notably by cooling, advantageously when the breaking pH is reached, i.e. a pH comprised between 4.80 and 4.20, notably between 4.65 and 4.35.

The lactase used in the present invention can be any kind of lactase such as:

| **Commercial reference** | **Supplier** |
|---|---|
| Ha-lactase™ 5200 | CHR Hansen |
| Maxilact® Lgi 5000 | DSM |

The lactase is advantageously added in an amount of 0.005 wt% to 0.20 wt%, in particular 0.01 wt% to 0.15 wt%, preferably 0.02 wt% to 0.06 wt%, based on the total weight of the dairy product.

In the method of manufacturing the strained fermented dairy product according to the invention, the lactase is added before the addition of the culture of bacteria. Preferably, the lactase is added before the culture of bacteria, notably at least 10 min and in particular at least 20 min before the culture of bacteria, such as 10 to 40 min before the culture of bacteria, in particular 20 to 30 min before the culture of bacteria.

Indeed, it has been surprisingly demonstrated that the addition of lactase to the dairy product slightly before the culture of bacteria allows further improving the separation step (see example 4).

Preferably, no other enzyme will be added in this step or another step of the method according to the invention. In particular, no chymosin (present in rennet) will be added in this step or another step of the method according to the invention.

### Step (c) - Separating a liquid phase (called whey) from the fermented dairy product

After fermentation, the fermented dairy product is subjected to a separating step in order to form a strained fermented dairy product having a higher total protein amount than the one of the starting fermented dairy product.

In this step, a liquid phase (the whey) containing mainly water, lactose and minerals is separated from the fermented dairy product so that the strained fermented dairy product remains.

This step is preferably performed by centrifugation, using thus a centrifugal separator as separating device.

This step is advantageously performed at a temperature (separation temperature) comprised between 30 and 45°C, notably between 35 and 43°C. Consequently, it could be necessary to heat or cool (notably heat) the fermented dairy product obtained at the end of the fermentation step (b) to the separation temperature before performing the separation step (c).

Advantageously, most of the proteins contained in the fermented dairy product remains in the final strained fermented dairy product. The protein recovery rate (PRR) is thus advantageously above 93 wt%, preferably above 95 wt%.

By "protein recovery rate" is meant, in the present invention, the percent ratio between the total protein content (in wt) in the fermented dairy product and the total protein content (in wt) in the strained fermented dairy product (i.e. the ratio of the total protein content (in wt) in the dairy product before and after the separation step (c)).

The strained fermented dairy product obtained at the end of this step will have thus advantageously a total protein content comprised between 6 and 16%, notably between 7 and 12%, such as between 8 and 10%. Indeed, the aim of the separation step (c) is to obtain a target total protein content.

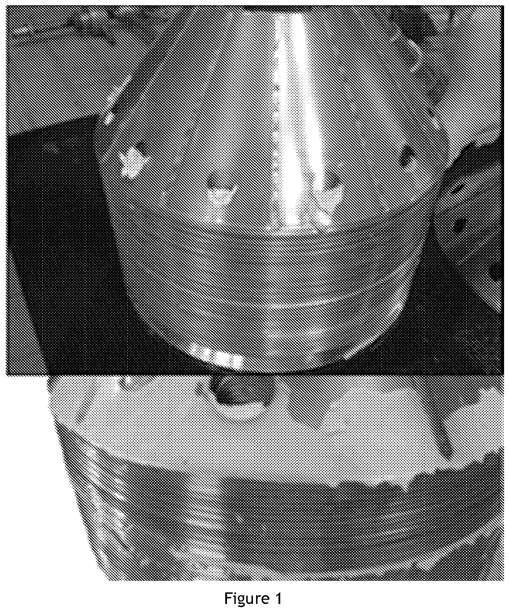

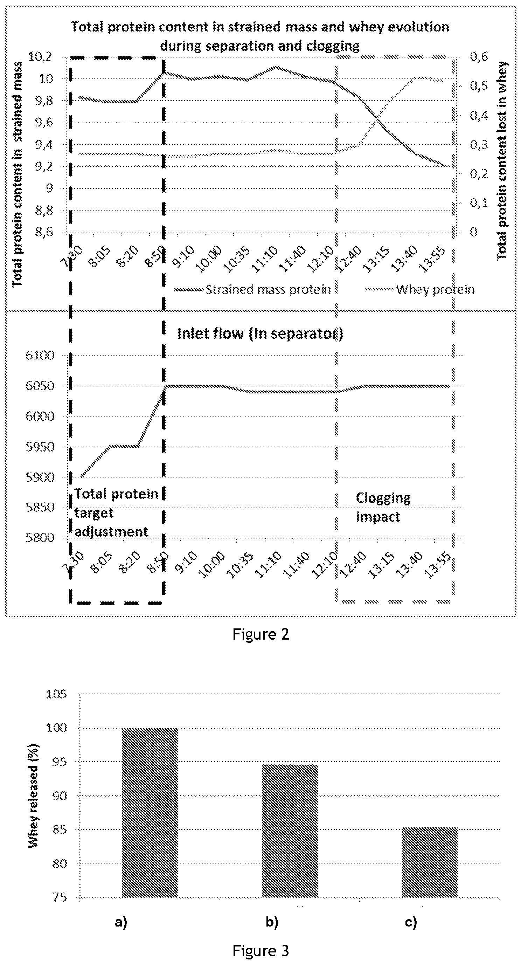

In the absence of lactase, a clogging of the separating device is observed after only few hours of operation of the production line requiring to stop the production line and to clean the separating device (see example 1 and Figures 1 and 2). This clogging is more important when the culture of bacteria used in the fermented step comprises a combination of mesophilic lactic acid bacteria and thermophilic lactic acid bacteria since the separation step is less effective (see example 2).

Actually, the clogging issue referred here is not related to standard nozzles clogging, commonly observed in standard centrifugal separation processes, when small particles collapses one or two nozzles and the outlet flow rates of the device are affected as immediate consequences.

The clogging phenomenon described here is observed between the separation disks of the centrifugal device (see Figure 1) and also all along the rising channels of the device. An accumulation of proteins present at a very high concentration (around 29% protein analysed) seems to be the most probable source of encountered problem. Therefore, the impact on flow rates modifications observed when a standard nozzles clogging occurs are not observed in this type of clogging. In this case, the main impacts observed are (see Figure 2):
- sudden decrease of total protein content in the strained fermented dairy product,
- sudden increase of total protein content in the separated whey, and
- no improvement whatever inlet flow increase is applied, sometimes making worse the situation.

It can be hypothesized that a small part of proteins not solubilized could "initiate" the clogging by sticking onto the walls of the separating device due to a specific biofilm produced by the specificity of the bacteria strains used in the fermentation step. Then, the more the process is going ahead, the more the proteins accumulate on the disks.

When this clogging issue occurs, the total protein content in the liquid phase or whey increases, whereas the total protein content in the strained fermented dairy product decreases (see example 1 / Figures 1 and 2). In addition to the clogging issue, it is then difficult or impossible to reach the target total protein content in the final strained fermented dairy product, no matter the inlet flow applied.

Without wishing to be bound by any theory, the inventors are of the opinion that this disks clogging issue could be due to the production of exopolysaccharides (EPS) by the bacteria which could lead to the obtaining of a gel structure having a lower permeability, an increased water binding, and the formation of a biofilm which can stick to the inner walls of the separating device.

The inventors are of the opinion that the lactase addition, at the time of the fermentation step, allows overcoming this clogging issue probably by modifying the metabolism of the bacteria used for the fermentation step impacting then the EPS production (notably in amount and/or in nature).

### Optional Step (d) - Smoothing

A smoothing step (e) can also be performed after the separation step (c).

This smoothing step can be carried out by means of a rotor stator mixer such as defined in WO 2007/095969.

This step can be carried out at a temperature (smoothing temperature) of between 30 and 45°C.

### Optional Step (e) - Cooling

Advantageously, the strained fermented dairy product is a refrigerated product, i.e. a product having a storage temperature of between 1 and 10°C, notably between 4 and 8°C.

The method according to the invention can thus comprise after step (c), and notably after step (d) when a smoothing step is performed, an additional step (e) of cooling the strained fermented dairy product to its storage temperature.

### Optional Step (f) - Adding food additives after the separation step

It could be envisaged to add to the strained fermented dairy product, after the separation step (c), and notably after step (d) when a smoothing step is performed, and notably after step (e) when a cooling step is performed, additional food additives, such as a cream material and/or a fruit preparation, if necessary.

The cream material can be cream or a mixture of cream and milk. It can have a fat content of from 20 to 50 wt%, in particular from 23 to 40 wt%.

The fruit preparation can be selected from fruits, fruit pieces, fruit puree, fruit compote, fruit sauce, fruit coulis, fruit jam, fruit jelly, fruit juice and mixtures thereof, optionally in a concentrated or dried form, optionally present in a matrix.

For example, the fruit(s) of the fruit-based preparation can be selected from strawberry, raspberry, blackberry, blueberry, cherry, apricot, peach, pear, apple, plum, pineapple, mango, banana, papaya, passion fruit, pomelo, orange, lemon, kiwi, coconut, vanilla and mixtures thereof.

The present invention relates also to the use of a lactase for preventing the clogging of the separating device used in the preparation of a strained fermented dairy product.

The strained fermented dairy product can be as defined previously. In particular, the strained fermented dairy product will have a total protein content comprised between 6 and 16%, notably between 7 and 12%, such as between 8 and 10%. The strained fermented dairy product can be more particularly a refrigerated product, i.e. a product having a storage temperature of between 1 and 10°C, notably between 4 and 8°C.

This strained fermented dairy product is prepared from a fermented dairy product by a separation step, using a separating device. The separating device is advantageously a centrifugal separator. The separation step can be performed notably as defined above for step (c). The separation step can be followed by a cooling step of the strained fermented dairy product to its storage temperature.

The fermented dairy product used to prepare the strained fermented dairy product will have advantageously a total protein content comprised between 2.8and 4.6%, notably between 3.1 and 4.0%, such as between 3.2 and 3.6%. The fermented dairy product can be prepared from a dairy product, notably as defined in step (a) above. The preparation of the fermented dairy product from the dairy product comprises at least a fermentation step using notably the culture of bacteria defined previously. This fermentation step is advantageously preceded by a heat-treatment step. The fermentation step and the heat-treatment step can be performed as defined previously (see steps (a) and (b)).

The lactase can be any kind of lactase such as:

| **Commercial reference** | **Supplier** |
|---|---|
| Ha-lactase™ 5200 | CHR Hansen |
| Maxilact® Lgi 5000 | DSM |

The invention is defined by the appended set of claims. Further details or advantages of the invention might appear in the following examples illustrated by the following figures.

### FIGURES

Figure 1 presents photographs of disks clogging occurred in a method of manufacture of a strained fermented dairy product using no lactase.
Figure 2 represents the graphs of total protein content in the obtained strained fermented dairy product (strained mass) and the separated whey in function of time, as well as the inlet flow in the separator device in function of time, during 6 hours and 30 minutes production with a centrifugal separator device at industrial scale.
Figure 3 represents the percent of whey release from the fermented dairy products of example 2 (relative to the influence of the culture of bacteria) in comparison to the Reference product (product a)).
Figure 4 represents microscopy confocal photos of a) a dairy product fermented with only thermophilic lactic acid bacteria (on the left) and b) a dairy product fermented with a culture of thermophilic and mesophilic lactic acid bacteria (on the right).
Figure 5 represents the percent of whey release from the fermented dairy products of example 3 (relative to the impact of lactase addition) in comparison to the Reference product (product a)).
Figure 6 represents the percent of whey release from the fermented dairy products of example 4 (relative to the impact of dosage and time of addition of the lactase) in comparison to the Reference product (product a)).
Figure 7 represents the total protein content of the strained fermented dairy products obtained in example 4 (relative to the impact of dosage and time of addition of the lactase).

### EXAMPLES:

### 1. Evolution of total protein content at the outlet of the separator device during separation before and after disk clogging appears

A strained fermented dairy product was prepared by fermenting a heat-treated skimmed dairy mix (prepared from skimmed milk and skimmed milk powder in proportions so as to obtain a total protein content of about 3.5%) with a culture of lactic acid bacteria consisting of a mix of *Lactobacillus delbrueckii* subsp. *bulgaricus, Streptococcus thermophilus, Lactococcus lactis* subsp. *lactis* and *Bifidobacterium animalis* subsp. *lactis.*

The heat-treatment was performed according to the following steps:
- a first pre heat-treatment step to reach a temperature of about 60°C, followed by
- an homogenisation step at a pressure of about 50 bars (2 stages), followed by
- a second heat-treatment step at a temperature of about 92° C for about 5 min.

The heat-treated dairy mix was fermented at 37°C and went into lactic acidification until reaching a targeted pH of 4.60.

The fermented dairy product was then re-heated to an appropriate separation temperature, around 41°C, and then separated by a 12 nozzles centrifugal separation device to produce around 1/3 of a strained fermented dairy product reaching a total protein content of about 10% and 2 /3 of whey.

After some hours of production, the total protein content in the strained fermented product at the outlet of the device suddenly decreases (below 9.3% total protein content) whereas the total protein content recovered in the whey increases the other way around (above 0.50%), without observing any fluctuation on the flows neither of the whey nor on the strained fermented mass outlet (see Figure 2), due to a disk clogging of the centrifugal separation device (see Figure 1).

When this effect appears, we observe a degradation of the main separation performance parameters: protein recovery rate decreases significantly (2% versus the starting phase of the production and getting worse when going ahead with the production) and the yield was increasing in the same way.

### 2. Impact of the culture of bacteria on disk clogging of the centrifugal separator

A heat-treated dairy mix was prepared as in example 1. The heat-treated dairy mix was then divided in 3 batches, to be inoculated with 3 different cultures of bacteria:
a) a culture of only thermophilic lactic acid bacteria strains: *Lactobacillus Bulgaricus* and *Streptococcus thermophilus,*
b) a culture of thermophilic lactic acid bacteria strains (*Lactobacillus Bulgaricus*, *Streptococcus thermophilus* and *Bifidobacterium bifidum*) and of a mesophilic lactic acid bacteria strain (Lactococcus lactis subsp. lactis),
c) a culture of thermophilic lactic acid bacteria strains (*Lactobacillus Bulgaricus* and *Streptococcus thermophilus*) and of a mesophilic lactic acid bacteria strain (*Lactococcus lactis* subsp. *lactis*).

The three heat-treated dairy mixes were then fermented as indicated in example 1. The fermented dairy products were then re-heated to the appropriate separation temperature, around 41°C, and then separated at laboratory spin centrifuge: 4 samples of 40 g of each fermented dairy product, at 4000 rpm during 4 min. Then, the whey separated was weighted with a precision weighting device. The results obtained are presented on Figure 3 as a percent of whey release in comparison to the product a) taken as the Reference product.

These results demonstrate that the quantity of whey released by each fermented dairy product is fully dependent on the type of bacteria used for the fermentation step: in all the products where a combination of thermophilic and mesophilic lactic acid bacteria strains (products b) and c)) were used for the fermentation step, a decrease of whey releasing capacity was observed.

Without wishing to be bound by any theory, the inventors are of the opinion that depending upon the type of bacteria used to performed the fermentation step, the secondary compounds resulting from the standard lactic acid fermentation may vary, producing differences in the permeability of the coagulum, therefore, producing differences in the way the curd is able to separate the liquid phase (whey) from the solid phase.

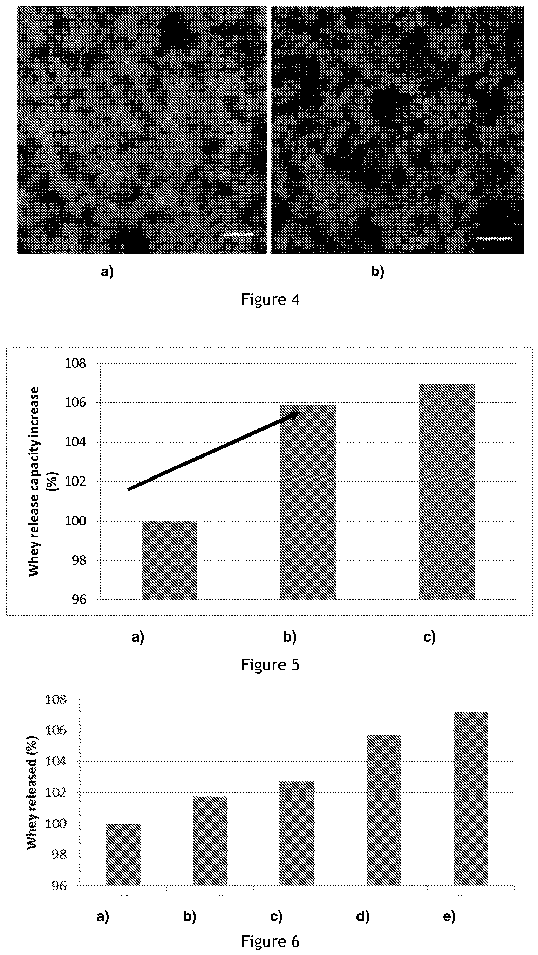

The fermented dairy products a) and b) were also observed in microscopy confocal (Confocal microscope Leica TC SP2 - fluorescent markers for proteins DyLight 488, λ_{abs} = 493 nm; λₑₘᵢ = 518 nm, 10 µL in 500 µL of fermented product - x40 water immersion at 20°C). The corresponding photos are presented on Figure 4 (on the left the fermented dairy product containing only thermophilic strains (product a)) and on the right the fermented dairy product containing a culture of thermophilic and mesophilic lactic acid bacteria strains (product b))). It can be observed that the density of the protein network is different between both fermented dairy products, the dairy product product b) being more granular, with bigger "dark" spaces between the proteins aggregates.

Without wishing to be bound by any theory, the inventors are of the opinion that the "dark" spaces in the proteins networks could contain different types and amounts of secondary metabolites of the fermentation (as for ex. exopolysaccharides), able to bind water, therefore, making the coagulum more impermeable and thus, more difficult to be separated.

### 3. Impact of the addition of a lactase on the whey releasing capacity of a dairy product fermented with a culture of thermophilic and mesophilic lactic acid bacteria strains

A heat-treated dairy mix was prepared as in example 1. The heat-treated dairy mix was then divided in 3 batches, to be inoculated as follows:
a) with a culture of thermophilic lactic acid bacteria strains *(Lactobacillus Bulgaricus, Streptococcus thermophilus* and *Bifidobacterium bifidum)* and of a mesophilic lactic acid bacteria strain (*Lactococcus lactis* subsp. *lactis*),
b) with a culture of thermophilic lactic acid bacteria strains *(Lactobacillus Bulgaricus,* (*Streptococcus thermophilus* and *Bifidobacterium bifidum*) and of a mesophilic lactic acid bacteria strains (*Lactococcus lactis* subsp. *lactis*) and a lactase (Ha-Lactase™ 5200 from Hansen at a dosage of 0.04%),
c) with a culture of only thermophilic lactic acid bacteria strains *(Lactobacillus Bulgaricus* and *Streptococcus thermophilus*).

The three dairy mixes were fermented as detailed in example 1. The fermented dairy products were then re-heated to the appropriate separation temperature, around 41°C, and then separated at laboratory spin centrifuge: 4 samples of 40 g of each fermented dairy product, at 4000 rpm during 4 min. Then, the whey separated was weighted with a precision weighting device. The results obtained are presented on Figure 5 as a percent of whey release in comparison to the product a) taken as the Reference product..

It was observed that the quantity of whey released by each fermented dairy product is fully dependent on the type of bacteria culture as mentioned in example 2 (product a) v. product c)). It was also observed that the addition of the lactase leads to a significant increase of the permeability of the curd (product a) v. product b)), close to the permeability of the curd of the dairy product fermented with only thermophilic strains (product c)).

### 4. Impact of the dosage and time of addition of the lactase on the whey releasing capacity of a dairy product fermented with a culture of thermophilic and mesophilic lactic acid bacteria strains

A heat-treated dairy mix was prepared as in example 1. The heat-treated dairy mix was then divided in 5 batches, to be inoculated as follows:
a) with a culture of thermophilic lactic acid bacteria strains *(Lactobacillus Bulgaricus, Streptococcus thermophilus* and *Bifidobacterium bifidum)* and of mesophilic strains (*Lactococcus lactis* subsp. *lactis*),
b) with a culture of thermophilic lactic acid bacteria strains *(Lactobacillus Bulgaricus, Streptococcus thermophilus* and *Bifidobacterium bifidum*) and of a mesophilic lactic acid bacteria strain (*Lactococcus lactis* subsp. *lactis*) and a lactase (Maxilact® LGi 5000 from DSM at a dosage of 0.06%),
c) with a culture of thermophilic lactic acid bacteria strains (*Lactobacillus Bulgaricus, Streptococcus thermophilus* and *Bifidobacterium bifidum*) and of a mesophilic lactic acid bacteria strain (*Lactococcus lactis* subsp. *lactis*) and a lactase (Maxilact® LGi 5000 from DSM at a dosage of 0.05%),
d) with a culture of thermophilic lactic acid bacteria strains (*Lactobacillus Bulgaricus, Streptococcus thermophilus* and *Bifidobacterium bifidum*) and of a mesophilic lactic acid bacteria strain (*Lactococcus lactis* subsp. *lactis*) and a culture of a lactase (Maxilact® LGi 5000 from DSM at a dosage of 0.05%) added 20 minutes before the innoculation of the culture of bacteria,
e) with a culture of only thermophilic lactic acid bacteria strains (*Lactobacillus Bulgaricus* and *Streptococcus thermophilus*).

The five dairy products were then fermented as in example 1. The fermented dairy products were then re-heated to the appropriate separation temperature, around 41°C, and then separated at laboratory spin centrifuge: 4 samples of 40 g of each fermented dairy product, at 4000 rpm during 4 min. Then, the whey separated was weighted with a precision weighting device. The results obtained are presented on Figure 6 as a percent of whey release in comparison to the product a) taken as the Reference product.

It was observed that the quantity of whey released by each coagulum is fully dependent on the type of bacteria culture (product a) v. product e)) as mentioned in examples 2 and 3. It was also observed that the addition of a lactase leads to a significant increase of the permeability of the curd (products b), c) and d) v. product a)). Moreover, it was observed that the time of addition of the lactase has an additional impact on the separation step (product c) v. product d)). When the lactase was added 20 minutes before the culture of bacteria, the impact on the whey releasing capacity was greater, allowing a slight decrease on the dosage of the lactase itself.

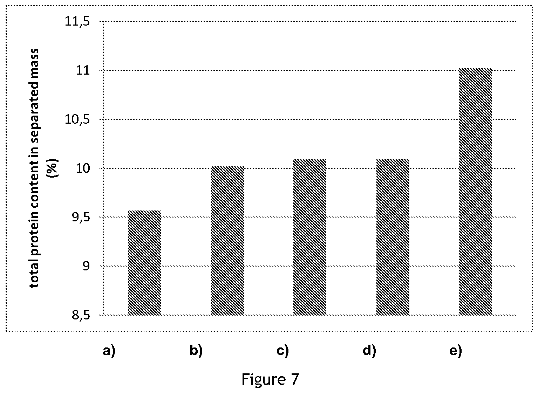

The total protein content of the strained fermented dairy products obtained in each case is presented on Figure 7.

## Claims

1. A method for manufacturing a strained fermented dairy product comprising the following successive steps:
(a) providing a dairy product,
(b) adding a lactase and a culture of bacteria comprising at least one strain of thermophilic lactic acid bacteria and at least one strain of mesophilic lactic acid bacteria and fermenting the dairy product to obtain a fermented dairy product, and
(c) separating a liquid whey from the fermented dairy product to obtain a strained fermented dairy product,
wherein the lactase is added before the culture of bacteria.

2. The method according to claim 1, wherein the dairy product provided in step (a) has a total protein content comprised between 2.8 and 4.6%, notably between 3.1 and 4.0%, such as between 3.2 and 3.6%.

3. The method according to any one of claims 1 and 2, wherein the strained fermented dairy product obtained has a total protein content comprised between 6 and 16%, notably between 7 and 12%, such as between 8 and 10%.

4. The method according to any one of claims 1 to 3, wherein the strain of mesophilic lactic acid bacteria is selected from *Lactococcus sp.,* in particular is selected from *Lactococcus lactis* subsp. *lactis, Lactococcus lactis* subsp. *cremoris* and combinations thereof.

5. The method according to claim 4, wherein the strain of mesophilic lactic acid bacteria is *Lactococcus lactis* subsp. *lactis.*

6. The method according to any one of claims 1 to 5, wherein the strain of thermophilic lactic acid bacteria is selected from *Streptococcus sp., Lactobacillus sp., Bifidobacterium sp.* and combinations thereof, in particular is selected from *Lactobacillus bulgaricus* and especially *Lactobacillus delbrueckii* subsp. *bulgaricus, Lactobacillus acidophilus, Lactobacillus paracasei, Lactobacillus casei, Lactobacillus pentosus, Lactobacillus helveticus, Lactobacillus reuteri, Lactobacillus plantarum, Lactobacillus bifidus, Bifidobacterium bifidum, Bifidobacterium infantis, Bifidobacterium animalis* and especially *Bifidobacterium animalis* subsp. *lactis, Bifidobacterium breve, Bifidobacterium longum, Streptococcus thermophilus, Streptococcus lactis, Streptococcus raffinolactis, Streptococcus cremoris* and combinations thereof.

7. The method according to any one of claims 1 to 6, wherein the strain of thermophilic lactic acid bacteria is selected from *Lactobacillus delbrueckii* subsp. *bulgaricus, Streptococcus thermophilus, Bifidobacterium animalis* subsp. *lactis* and combinations thereof.

8. The method according to any one of claims 1 to 7, wherein the culture of bacteria is a combination of *Lactobacillus delbrueckii* subsp. *bulgaricus, Streptococcus thermophilus, Lactococcus lactis* subsp. *lactis* and *Bifidobacterium animalis* subsp. *lactis.*

9. The method according to any one of claims 1 to 8, wherein the lactase is added 10 to 40 min, notably 20 to 30 min, before the culture of bacteria.

10. The method according to any one of claims 1 to 9, wherein the lactase is added in an amount of 0.005 wt% to 0.20 wt%, in particular 0.01 wt% to 0.15 wt%, preferably 0.02 wt% to 0.06 wt%, based on the total weight of the dairy product.

11. The method according to any one of claims 1 and 10, wherein the dairy product is fermented at a temperature between 25°C and 44°C, notably between 30 and 40°C, for 3 to 25 hours, preferably for 5 to 15 hours.

12. The method according to any one of claims 1 to 11, wherein step (c) is performed by centrifugation.

13. The method according to any one of claims 1 to 12, comprising an additional step (e) after step (c) of cooling the strained fermented dairy product to a temperature of between 1 and 10°C, notably between 4 and 8°C.

14. The use of a lactase for preventing the clogging of the separating device used in the preparation of a strained fermented dairy product.

## Patentansprüche

1. Verfahren zur Herstellung eines gesiebten fermentierten Milchprodukts, umfassend die folgenden sukzessiven Schritte:
(a) Bereitstellen eines Milchprodukts,
(b) Zugeben einer Lactase und einer Bakterienkultur, umfassend mindestens einen Stamm von thermophilen Milchsäurebakterien und mindestens einen Stamm von mesophilen Milchsäurebakterien und Fermentieren des Milchprodukts, um ein fermentiertes Milchprodukt zu erhalten, und
(c) Trennen einer flüssigen Molke vom fermentierten Milchprodukt, um ein gesiebtes fermentiertes Milchprodukt zu erhalten,
wobei die Lactase vor der Bakterienkultur zugegeben wird.

2. Verfahren nach Anspruch 1, wobei das Milchprodukt, bereitgestellt in Schritt (a), einen gesamten Proteingehalt aufweist, der im Bereich zwischen 2,8 und 4,6 % liegt, insbesondere zwischen 3,1 und 4,0 %, wie z. B. zwischen 3,2 und 3,6 %.

3. Verfahren nach einem der Ansprüche 1 und 2, wobei das erhaltene gesiebte fermentierte Milchprodukt einen gesamten Proteingehalt aufweist, der im Bereich zwischen 6 und 16 % liegt, insbesondere zwischen 7 und 12 %, wie z. B. zwischen 8 und 10 %.

4. Verfahren nach einem der Ansprüche 1 bis 3, wobei der Stamm von mesophilen Milchsäurebakterien ausgewählt ist aus *Lactococcus sp.,* insbesondere ausgewählt ist aus *Lactococcus lactis* subsp. *lactis, Lactococcus lactis* subsp. *cremoris* und Kombinationen davon.

5. Verfahren nach Anspruch 4, wobei der Stamm von mesophilen Milchsäurebakterien *Lactococcus lactis* subsp. *lactis* ist.

6. Verfahren nach einem der Ansprüche 1 bis 5, wobei der Stamm von thermophilen Milchsäurebakterien ausgewählt ist aus *Streptococcus sp., Lactobacillus sp., Bifidobacterium sp.* und Kombinationen davon, insbesondere ausgewählt ist aus *Lactobacillus bulgaricus* und insbesondere *Lactobacillus delbrueckii* subsp. *bulgaricus, Lactobacillus acidophilus, Lactobacillus paracasei, Lactobacillus casei, Lactobacillus pentosus, Lactobacillus helveticus, Lactobacillus reuteri, Lactobacillus plantarum, Lactobacillus bifidus, Bifidobacterium bifidum, Bifidobacterium infantis, Bifidobacterium animalis* und insbesondere *Bifidobacterium animalis* subsp. *lactis, Bifidobacterium breve, Bifidobacterium longum, Streptococcus thermophilus, Streptococcus lactis, Streptococcus raffinolactis, Streptococcus cremoris* und Kombinationen davon.

7. Verfahren nach einem der Ansprüche 1 bis 6, wobei der Stamm von thermophilen Milchsäurebakterien ausgewählt ist aus *Lactobacillus delbrueckii* subsp. *bulgaricus, Streptococcus thermophilus, Bifidobacterium animalis* subsp. *lactis* und Kombinationen davon.

8. Verfahren nach einem der Ansprüche 1 bis 7, wobei die Bakterienkultur eine Kombination ist aus *Lactobacillus delbrueckii* subsp. *bulgaricus, Streptococcus thermophilus, Lactococcus lactis* subsp. *lactis* und *Bifidobacterium animalis* subsp. *lactis.*

9. Verfahren nach einem der Ansprüche 1 bis 8, wobei die Lactase 10 bis 40 min, insbesondere 20 bis 30 min vor der Bakterienkultur zugegegeben wird.

10. Verfahren nach einem der Ansprüche 1 bis 9, wobei die Lactase in einer Menge von 0,005 Gew% bis 0,20 Gew%, insbesondere 0,01 Gew% bis 0,15 Gew%, vorzugsweise 0,02 Gew% bis 0,06 Gew%, basierend auf dem Gesamtgewicht des Milchprodukts zugegeben wird.

11. Verfahren nach einem der Ansprüche 1 und 10, wobei das Milchprodukt bei einer Temperatur zwischen 25 °C und 44 °C, insbesondere zwischen 30 und 40 °C, während 3 bis 25 Stunden, vorzugsweise während 5 bis 15 Stunden fermentiert wird.

12. Verfahren nach einem der Ansprüche 1 bis 11, wobei Schritt (c) durch Zentrifugieren durchgeführt wird.

13. Verfahren nach einem der Ansprüche 1 bis 12, umfassend einen zusätzlichen Schritt (e) nach Schritt (c) des Abkühlens des gesiebten fermentierten Milchprodukts auf eine Temperatur zwischen 1 und 10 °C, insbesondere zwischen 4 und 8 °C.

14. Verwendung einer Lactase zur Verhinderung des Verstopfens der Trennvorrichtung, die bei der Herstellung eines gesiebten fermentierten Milchprodukts verwendet wird.

## Revendications

1. Méthode de fabrication d'un produit laitier fermenté concentré comprenant les étapes successives suivantes :
(a) fourniture d'un produit laitier,
(b) ajout d'une lactase et d'une culture de bactéries comprenant au moins une souche de bactéries lactiques thermophiles et au moins une souche de bactéries lactiques mésophiles et fermentation du produit laitier pour obtenir un produit laitier fermenté, et
(c) séparation d'un lactosérum liquide du produit laitier fermenté pour obtenir un produit laitier fermenté concentré,
dans laquelle la lactase est ajoutée avant la culture de bactéries.

2. Méthode selon la revendication 1, dans laquelle le produit laitier fourni à l'étape (a) a une teneur totale en protéines comprise entre 2,8 et 4,6 %, notamment entre 3,1 et 4,0 %, telle qu'entre 3,2 et 3,6 %.

3. Méthode selon l'une quelconque des revendications 1 et 2, dans laquelle le produit laitier fermenté concentré obtenu a une teneur totale en protéines comprise entre 6 et 16 %, notamment entre 7 et 12 %, comme entre 8 et 10 %.

4. Méthode selon l'une quelconque des revendications 1 à 3, dans laquelle la souche de bactéries lactiques mésophiles est choisie parmi l'espèce *Lactococcus,* en particulier est choisie parmi *Lactococcus lactis* subsp. *lactis, Lactococcus lactis* subsp. *cremoris* et les combinaisons de celles-ci.

5. Méthode selon la revendication 4, dans laquelle la souche de bactéries lactiques mésophiles est *Lactococcus lactis* subsp. *lactis.*

6. Méthode selon l'une quelconque des revendications 1 à 5, dans laquelle la souche de bactéries lactiques thermophiles est choisie parmi l'espèce *Streptococcus,* l'espèce *Lactobacillus,* l'espèce *Bifidobacterium* et les combinaisons de celles-ci, en particulier est choisie parmi *Lactobacillus bulgaricus* et spécialement *Lactobacillus delbrueckii* subsp. *bulgaricus, Lactobacillus acidophilus, Lactobacillus paracasei, Lactobacillus casei, Lactobacillus pentosus, Lactobacillus helveticus, Lactobacillus reuteri, Lactobacillus plantarum, Lactobacillus bifidus, Bifidobacterium bifidum, Bifidobacterium infantis, Bifidobacterium animalis* et spécialement *Bifidobacterium animalis* subsp. *lactis, Bifidobacterium breve, Bifidobacterium longum, Streptococcus thermophilus, Streptococcus lactis, Streptococcus raffinolactis, Streptococcus cremoris* et les combinaisons de celles-ci.

7. Méthode selon l'une quelconque des revendications 1 à 6, dans laquelle la souche de bactéries lactiques thermophiles est choisie parmi *Lactobacillus delbrueckii* subsp. *bulgaricus, Streptococcus thermophilus, Bifidobacterium animalis* subsp. *lactis* et les combinaisons de celles-ci.

8. Méthode selon l'une quelconque des revendications 1 à 7, dans laquelle la culture de bactéries est une combinaison de *Lactobacillus delbrueckii* subsp. *bulgaricus, Streptococcus thermophilus, Lactococcus lactis* subsp. *lactis* et *Bifidobacterium animalis* subsp. *lactis.*

9. Méthode selon l'une quelconque des revendications 1 à 8, dans laquelle la lactase est ajoutée 10 à 40 min, notamment 20 à 30 min, avant la culture de bactéries.

10. Méthode selon l'une quelconque des revendications 1 à 9, dans laquelle la lactase est ajoutée en une quantité de 0,005 % en poids à 0,20 % en poids, en particulier de 0,01 % en poids à 0,15 % en poids, de préférence de 0,02 % en poids à 0,06 % en poids, sur la base du poids total du produit laitier.

11. Méthode selon l'une quelconque des revendications 1 et 10, dans laquelle le produit laitier est fermenté à une température entre 25 °C et 44 °C, notamment entre 30 et 40 °C, pendant 3 à 25 heures, de préférence pendant 5 à 15 heures.

12. Méthode selon l'une quelconque des revendications 1 à 11, dans laquelle l'étape (c) est réalisée par centrifugation.

13. Méthode selon l'une quelconque des revendications 1 à 12, comprenant une étape (e) additionnelle après l'étape (c) de refroidissement du produit laitier fermenté concentré à une température entre 1 et 10 °C, notamment entre 4 et 8 °C.

14. Utilisation d'une lactase pour empêcher le colmatage du dispositif de séparation utilisé dans la préparation d'un produit laitier fermenté concentré.
